# EUROPEAN PATENT SPECIFICATION

(11) **EP 0 820 695 B1**
(45) Date of publication and mention of the grant of the patent: **31.05.2000**
(21) Application number: 97202267.7
(22) Date of filing: 21.07.1997
(51) Int. Cl.: A01K 31/00, A01K 31/04, A01K 31/22

(54) **Method for processing poultry manure, house unit for use therein and floor therefor**
Verfahren zur Verarbeitung von Hühnermist, Stall und Boden dafür
Procédé de traitement du fumier de poule, unité de habitation et plancher pour ce procédé

(30) Priority: 19.07.1996 NL 1003643
(43) Date of publication of application: 28.01.1998
(73) Proprietor: Van de Ven Beheer B.V., 5521 DJ Eersel (NL)
(72) Inventor: Van de Ven, Cornelius Antonius Wilhelmus, 5521 NB Eersel (NL)
(74) Representative: Bartelds, Erik

(56) References cited:
- EP-A- 0 561 104
- NL-A- 8 902 177
- NL-A- 9 201 642
- US-A- 3 507 010
- US-A- 3 726 255
- "Manure, Environment and Ammonia" POULTRY INTERNATIONAL, vol. 31, no. 13, November 1992, MOUNT MORRIS, US, pages 18-19, XP000363632

## Description

The invention relates to a method for processing poultry manure comprising the steps of:
- receiving the manure on an air-permeable floor which supports the poultry,
- leaving the manure to lie on the floor for a time,
- guiding through the manure lying on the floor an air flow directed transversely of the floor, and
- finally discharging the manure dried by the air flow. Such a method is known, for instance from the prior art document NL-A-8 902 177.

Since the introduction of intensive poultry farming the processing of poultry manure has represented a problem which is becoming increasingly more serious as the environmental requirements are made more stringent. Poultry manure creates ammonia which is harmful to human, animal and environment and which, particularly in locations where intensive poultry farming is practiced, causes considerable nuisance to the surrounding area.

It is known that formation and emission of ammonia can be reduced by drying the manure as rapidly as possible, for instance by guiding an air flow therealong. In laying batteries the animals are for instance housed for this purpose on a floor through which the manure can pass, such as a wire grid, under which is arranged a discharge conveyor. In this situation the manure thus falls directly through the floor onto the discharge conveyor and is thereby guided to an aerating area located outside the animal accommodation where the manure is aerated and dried. Aeration can optionally take place already in the animal accommodation. A drawback to this known processing method is that it requires a very open structure of the floor, which is undesirable from the viewpoint of the well-being of the animals. Such a very open floor structure is not only unpleasant for the animals but it can also result in injuries such as for instance breast blisters, which is disadvantageous when the animals are being reared for slaughter, since in this case the injured animals will be worth less.

In another known method the animals are reared on the ground, wherein they can be "free-ranging". This improves the well-being of the animals. A problem here however is that the processing of the manure of such free-ranging poultry is difficult as the aerating of the manure, as a consequence of the closed character of the ground, can only take place from the sides or from the top of the accommodation, whereby the contact between the manure and the air is not particularly intensive and drying takes a comparatively long time. Much ammonia can thus be released. In addition, the discharge of the manure once it is dried is also a problem since it must be shovelled or shifted from the floor of the accommodation. Finally, this method of housing the animals of course requires a very large amount of space.

NL-A-8 902 177 discloses a method of processing manure produced by free-ranging poultry wherein the poultry, which is reared for slaughter, is held in an accommodation having an air-permeable floor formed by a lattice carrying a fine mesh wire netting. This air-permeable floor is covered by a layer of stable litter lying on the netting. The manure produced by the poultry is held in the litter. Air is blown into a space under the floor and from there through the air-permeable floor, thus drying the manure lying on the litter. When the animals have grown sufficiently to be slaughtered, the netting carrying the litter, manure and animals is pulled away through a side wall of the accommodation, and the animals are separated from the litter and the manure, which is then discharged.

The invention now has for its object to provide an improved method for processing poultry manure which is animal-friendly and whereby the occurrence of injuries is avoided but wherein an intensive aeration and rapid drying of the manure is nevertheless possible. According to the invention this is achieved with a method comprising the steps described above, and which is characterized in that the manure lying on the floor is caused to be reduced in size by the poultry foraging thereon, the floor being provided with openings which are dimensioned such that the manure remains lying on the floor as long as it is not reduced in size, and the dried and reduced manure being discharged through the openings in the floor.

By leaving the manure lying on the floor and allowing the poultry to forage therein, on the one hand an animal-friendly ground is obtained while on the other the manure is reduced in size in quick and efficient manner, whereby the specific surface area thereof is enlarged and the evaporation of moisture from the manure is accelerated. By simultaneously generating an air flow transversely through the floor an intensive contact of the air with the manure is obtained, whereby drying is speeded up still further. Finally, by having the manure drop through the openings in the floor after it has been reduced in size, it may be discharged in an efficient way.

A preferably applied variant of the method according to the invention is described in dependent claim 2.

The invention also relates to a house unit which is suitable for performing the method as described above. Such a house unit may be provided with at least one accommodation area for poultry, which accommodation area is bounded on the underside by an air-permeable floor, in addition to means for generating an air flow directed transversely of the floor, and is characterized according to the invention in that the floor is provided with openings which are dimensioned such that the manure remains lying on the floor as long as it is not reduced in size and in that a space is formed under the accommodation area for receiving poultry manure reduced in size which has fallen through the openings in the floor.

Preferred embodiments of the house unit according to the invention are described in the dependent claims 4-7.

Finally, the invention further relates to a floor for use in such a house unit.

The invention is now elucidated on the basis of a number of embodiments wherein reference is made to the annexed drawing, in which:
figure 1 shows a partly broken away top view of a floor of an accommodation area for poultry according to the invention in which different combinations of openings and protruding pins are shown,
figure 1A shows a cross-sectional view along the line A-A in figure 1,
figure 1B is a cross-sectional view corresponding with figure 1A of an alternative embodiment of the floor,
figure 2 is a cross-section through a laying battery in which the method according to the invention is applied,
figure 3 is a view corresponding with figure 2 of an application of the invention in a rearing unit for broiler chicks, and
figure 4 is a cross-section corresponding with figures 2 and 3 of a group cage for the application of the invention.

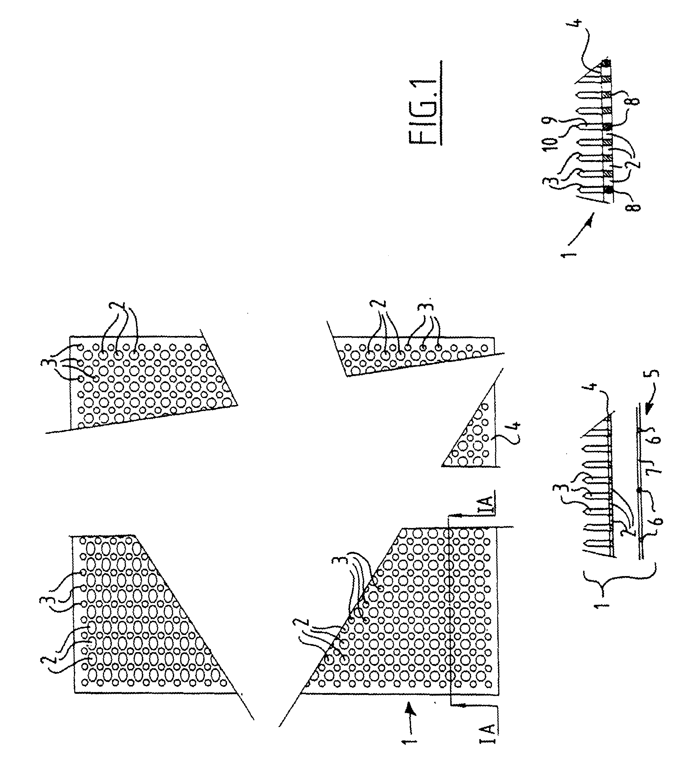

A floor 1 for the application in an accommodation area 11 for poultry is formed by a mat 4 in which are a plurality of openings 2 and which is further provided with protruding parts or pins 3. Both the pins 3 and the openings 2 located therebetween are arranged in a regular pattern on mat 4. The form and dimensions of both pins 3 and openings 2 can herein be varied depending on the type of livestock for which mat 4 is intended and the nature of the manure for processing. The openings can thus be round but also elongate as shown in the top left hand corner of figure 1, while pins 3, which can be manufactured from a flexible plastic material, can be cylindrical, tapering or, as in the shown example, can have a discontinuous progression with a cylindrical main part 9 and a tip 10 protruding therefrom. What is important is that the form and dimensions of openings 2 and pins 3 are chosen such that the manure in the first instance remains lying on the floor, is trampled and reduced in size by co-action of pins 3 and the legs of the animals, and eventually falls through openings 2 only after being sufficiently reduced and dried.

Mat 1 can take a self-supporting form, wherein it is provided with for instance steel reinforcing wires 8 (figure 1B) arranged at regular interspacing, but it is also conceivable for mat 4 simply to be laid on a standard wire grid 5 formed by longitudinal wires 6 and transverse wires 7 (figure 1A).

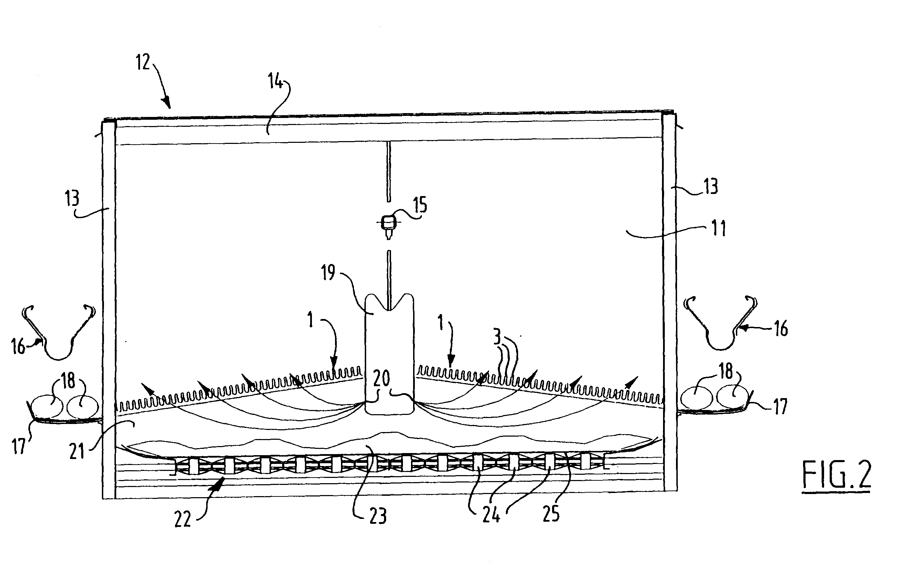

The floor 1 formed by mat 4, optionally in combination with the grid 5 located thereunder, can be applied in many types of accommodation areas 11 for poultry. This floor 1 can thus for instance be applied in a laying battery 12 (figure 2), wherein it is then disposed at a slight incline in order to simplify transport of the eggs outside accommodation area 11. The battery is otherwise of conventional structure herein with wire-mesh walls 13 on either side, whereby in combination with floor 1 and an upper wall 14 a living area 11 is defined. Battery 12 is herein provided in usual manner with a water supply system 15 and an automated feeder system 16, both of which are only shown schematically. On either side of battery 12 receiving and discharging means 17 are further present for eggs 18 laid by the poultry present in the battery, which receiving and discharging means 17 can take the form of chutes, belt conveyors or the like. In addition, battery 12 also has a central air feed pipe 19 through which the air can be supplied with which the manure must be dried. This feed pipe 19 extends in longitudinal direction of battery 12 and is provided on its underside with outlet openings 20 which are spaced in longitudinal direction and through which the air is blown in uniformly distributed manner into a space 21 under the floor 1. At the bottom of this space 21 a conveyor 22 is present for receiving and discharging dried and reduced manure which has fallen through floor 1. This receiving and discharging conveyor 22 is herein formed for instance by a belt 25 guided over rollers 24.

Manure coming from poultry living in this battery 12 will accumulate on and in the floor 1. This manure will herein first rest on the pins 3 of floor 1 until it drops therebetween as a consequence of the foraging of the animals or their simply lying on the floor 1. Herein the manure is thus already broken up to some degree and reduced in size by pins 3. During the continued activity of the poultry, the manure lying in the spaces between pins 3 is reduced even further in size by the legs of the poultry in combination with pins 3 of floor 1. No energy need therefore be supplied from outside for this reducing process. When the manure has been sufficiently reduced in size it falls through the openings 2 in floor 1 onto conveyor 22 in the collection space 21 and can be discharged thereby out of battery 12.

Due to the presence of the manure on and in the floor 1 this latter is perceived by the animals as a foraging floor. The well-being of the animals is hereby improved, while the danger of injury is moreover decreased. The manure is further reduced in size very rapidly by the foraging movements, whereby the specific surface area is enlarged and the moisture present in the manure can evaporate rapidly. In combination with the intensive aeration from the underside through the floor 1 this provides a rapid drying of the manure and therefore a very low ammonia emission. The dry manure which falls through floor 1 is in addition immediately suitable for discharge and does not have to undergo any further drying. The solid content of this manure will amount for instance to about 85%, in contrast to a solid content of about 55% in conventional laying batteries. Due to the foraging, possible parasites and feather fats are further relinquished by the poultry to the material on floor 1 and thereby simultaneously removed when this material drops through the floor. In addition, the floor with the protruding pins 3 has the further advantage in the case of a laying battery that, due to the resilient, flexible character of pins 3, eggs which are laid by the poultry present in the battery are received in elastic manner on floor 1 so that the chance of damage to the eggs in the form of cracks, breakage and the occurrence of hairline cracks is decreased.

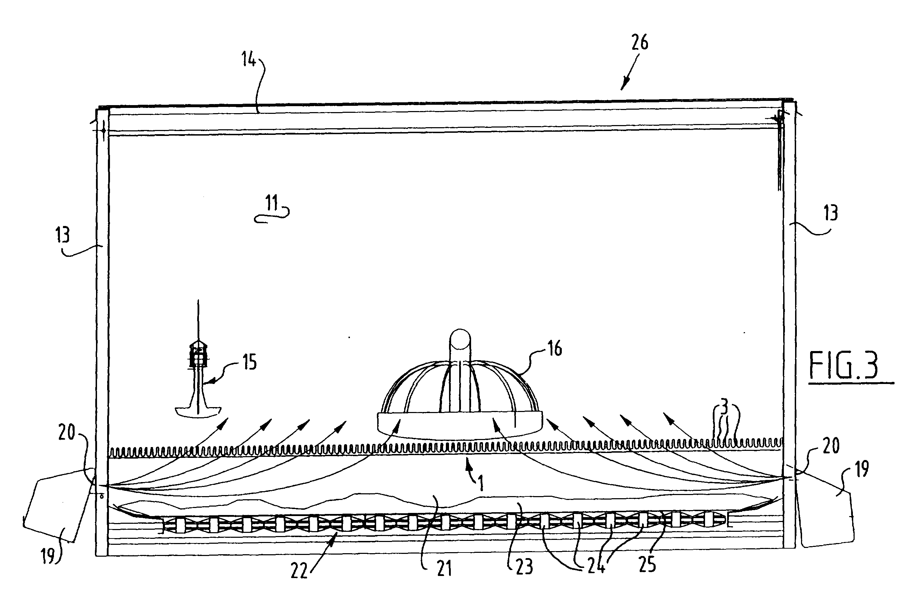

Floor 1 is also suitable for use in accommodation areas for poultry reared for slaughter, for instance broiler chicks. Floor 1 does not then of course have to be arranged at an incline since eggs do not have to be discharged anyway. An example of this application is shown in figure 3, where a broiler coop 26 is shown in cross-section. Although the water supply 15, feeder system 16 and air supply pipes 19 here differ slightly in structure from the laying battery of figure 2, the general construction and use of the accommodation area 11 is the same.

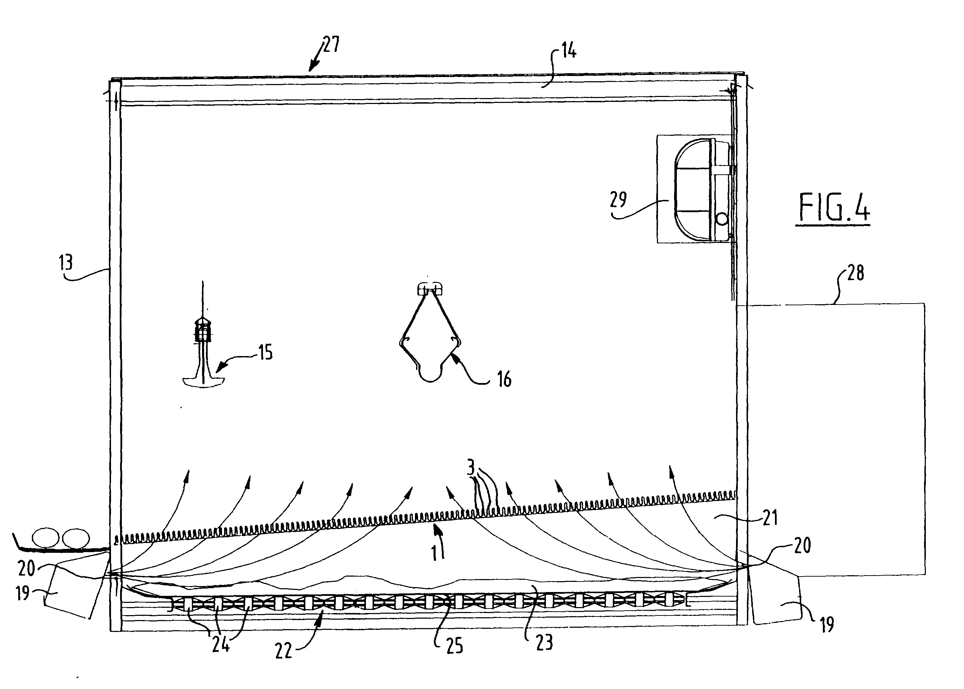

Another possibility is the use of the floor according to the invention in a so-called group cage 27 for egg-laying poultry (figure 4), wherein the floor will of course once again be arranged at an incline. Group cage 27 herein has substantially the same elements as the accommodation areas shown in figures 2 and 3 but is further extended with a laying nest into which the animals will withdraw to lay eggs, and with a lighting unit 29.

Through use of the floor with openings and protruding parts as described above in accommodation areas for poultry, poultry manure can be reduced in size and dried rapidly and simply, whereby the emission of ammonia is greatly reduced, while the well-being of the animals is moreover greatly enhanced by the soft and natural character of the floor filled with manure.

## Claims

1. Method for processing poultry manure, comprising the steps of:
- receiving the manure on an air-permeable floor (1) which supports the poultry,
- leaving the manure to lie on the floor (1) for a time,
- guiding through the manure lying on the floor (1) an air flow directed transversely of the floor (1), and
- finally discharging the manure dried by the air flow, **characterized in that** the manure lying on the floor (1) is caused to be reduced in size by the poultry foraging thereon, the floor (1) being provided with openings (2) which are dimensioned such that the manure remains lying on the floor (1) as long as it is not reduced in size, and the dried and reduced manure being discharged through the openings (2) in the floor (1).

2. Method as claimed in claim 1, **characterized in that** the floor (1) has a rough surface structure with protruding parts (3) and the manure is subjected to a first size-reduction process by the protruding parts (3) and is subsequently further reduced in size in the spaces between the protruding parts (3).

3. House unit (12;26;27) comprising at least one accommodation area (11) for poultry, which accommodation area (11) is bounded on the underside by an air-permeable floor (1), in addition to means (19,20) for generating an air flow directed transversely of the floor (1), **characterized in that** the floor (1) is provided with openings (2) which are dimensioned such that the manure remains lying on the floor (1) as long as it is not reduced in size and in that a space (21) is formed under the accommodation area (11) for receiving poultry manure reduced in size which has fallen through the openings (2) in the floor (1).

4. House unit (12;26;27) as claimed in claim 3, **characterized in that** the floor (1) has a rough surface structure with protruding parts (3).

5. House unit (12;26;27) as claimed in claim 4, **characterized in that** the protruding parts (3) are formed by pins arranged at regular interspacing and the openings (2) are arranged in the floor (1) in at least a part of the interspaces between the pins (3).

6. House unit (12;26;27) as claimed in claim 5, **characterized in that** the floor takes the form of a grid and the pins (3) are arranged at nodes of the grid.

7. House unit (12;26;27) as claimed in claim 5 or 6, **characterized in that** at least the pins (3) are manufactured from a flexible plastic material.

## Patentansprüche

1. Verfahren zur Verarbeitung von Geflügelmist, mit den Schritten:
- Aufnahme des Geflügelmistes auf einem luftdurchlässigen Boden (1), der die Geflügel trägt,
- Liegenlassen des Mistes auf dem Boden (1) für eine gewisse Zeit,
- Leiten eines Luftstromes durch den auf dem Boden liegenden Mist quer zum Boden (1), und
- zum Schluss Abladen des durch die Luft getrockneten Mistes,
dadurch **gekennzeichnet**, dass bewirkt wird, dass der auf dem Boden liegende Mist (1) durch das darauf nach Futter suchenden Geflügels in seiner Größe verringert wird, wobei der Boden (1) mit Öffnungen (2) versehen ist, die so dimensioniert sind, dass der Mist solange auf dem Boden (1) liegen bleibt, solange er nicht in seiner Größe reduziert ist, und der getrocknete und reduzierte Mist durch die Öffnungen (2) im Boden (1) abgegeben wird.

2. Verfahren nach Anspruch 1, dadurch **gekennzeichnet**, dass der Boden (1) eine raue Oberflächenstruktur mit vorstehenden Teilen (3) hat und der Mist durch die vorstehenden Teile (3) einem ersten größereduzierenden Prozess unterzogen wird und darauf folgend weiterhin in den Zwischenräumen zwischen den vorstehenden Teilen (3) größenreduziert wird.

3. Stall (12; 26; 27) mit wenigstens einem Unterbringungsbereich (11) für Geflügel, wobei dieser Unterbringungsbereich (11) an der Unterseite durch einen luftdurchlässigen Boden (1) begrenzt ist, zusätzlich zu Mitteln (19, 20) zum Erzeugen eines Luftstroms, der quer zum Boden (1) gerichtet ist,
dadurch **gekennzeichnet**, dass der Boden (1) mit Öffnungen (2) versehen ist, die so dimensioniert sind, dass der Mist auf dem Boden (1) solange liegen bleibt, wie er nicht größenreduziert ist, und dass unterhalb des Unterbringungsbereiches (11) ein Raum (21) ausgebildet ist, um den in der Größe reduzierten Geflügelmist aufzunehmen, der durch die Öffnungen (2) im Boden (1) gefallen ist.

4. Stall (12; 26; 27) nach Anspruch 3, dadurch **gekennzeichnet**, dass der Boden (1) eine raue Oberflächenstruktur mit vorstehenden Teilen (3) hat.

5. Stall (12; 26; 27) nach Anspruch 4, dadurch **gekennzeichnet**, dass die vorstehenden Teile (3) durch Stifte gebildet sind, die in regelmäßigen Abständen angeordnet sind und die Öffnungen (2) im Boden (1) in wenigstens einem Teil der Zwischenräume zwischen den Stiften (3) ausgebildet sind.

6. Stall (12; 26; 27) nach Anspruch 5, dadurch **gekennzeichnet**, dass der Boden die Form eines Gitters einnimmt und die Stifte (3) an Knoten des Gitters angeordnet sind.

7. Stall (12; 26; 27) nach Anspruch 5 oder 6, dadurch **gekennzeichnet**, dass wenigstens die Stifte (3) aus einem flexiblen Kunststoffmaterial hergestellt sind.

## Revendications

1. Procédé pour traiter le fumier de volaille, incluant les étapes suivantes :
- recueillir le fumier sur un plancher (1) perméable à l'air, lequel supporte la volaille,
- laisser le fumier reposer sur le plancher (1) pendant un certain temps,
- faire passer à travers le fumier répandu sur le plancher (1) un courant d'air dans le sens transversal par rapport au plancher (1), et
- évacuer le fumier séché par le courant d'air, caractérisé en ce que le fumier répandu sur le plancher (1) est réduit en taille par le picotage de la volaille sur ce dernier, le plancher (1) étant muni d'ouvertures (2) qui sont dimensionnées de telle manière que le fumier reste répandu sur le plancher (1) aussi longtemps qu'il n'a pas été réduit en taille, et le fumier séché et réduit est évacué à travers les ouvertures (2) ménagées dans le plancher (1).

2. Procédé selon la revendication 1, caractérisé en ce que le plancher (1) présente une surface de structure irrégulière avec des parties en saillie (3) et le fumier est soumis à un premier processus de réduction de taille par les parties en saillie (3) et est ensuite encore réduit en taille dans les espaces entre les parties en saillie (3).

3. Unité de logement (12 ; 26 ; 27) comprenant au moins une zone formant logement (11) pour la volaille, ladite zone formant logement (11) étant limitée dans sa partie inférieure par un plancher (1) perméable à l'air, en plus des moyens (19 ; 20) destinés à générer un courant d'air dirigé dans le sens transversal par rapport au plancher (1), caractérisée en ce que le plancher (1) est muni d'ouvertures (2) qui sont dimensionnées de manière à ce que le fumier reste répandu sur le plancher (1) aussi longtemps qu'il n'a pas été réduit en taille et en ce qu'un espace (21) est ménagé sous la zone formant logement (11) destinée à recevoir le fumier de volaille réduit en taille qui est tombé à travers les ouvertures (2) du plancher (1).

4. Unité de logement (12 ; 26 ; 27) selon la revendication 3, caractérisée en ce que le plancher (1) présente une surface de structure irrégulière munie de parties en saillies (3).

5. Unité de logement (12 ; 26 ; 27) selon la revendication 4, caractérisée en ce que les parties en saillie (3) sont formées par des picots régulièrement espacés entre eux et les ouvertures (2) sont disposées dans le plancher (1) dans au moins une partie des espaces entre les picots (3).

6. Unité de logement (12 ; 26 ; 27) selon la revendication 5, caractérisée en ce que le plancher prend la forme d'une grille et les picots (3) sont disposés aux croisements de la grille.

7. Unité de logement (12 ; 26 ; 27) selon la revendication 5 ou 6, caractérisée en ce qu'au moins les picots (3) sont fabriqués dans un matériau plastique souple.
